# DEMANDE DE BREVET EUROPEEN

(11) **EP 2 065 249 A1**
(43) Date de publication de la demande: **03.06.2009**
(21) Numéro de dépôt: 08168241.1
(22) Date de dépôt: 04.11.2008
(51) Int. Cl.: B60K 37/00, B60R 11/02

(54) **Tableau de commande à pion(s) de centrage, pour une planche de bord de véhicule automobile, et procédé de fixation associé**

(30) Priorité: 07.11.2007 FR 0758863
(71) Demandeur: PEUGEOT CITROËN AUTOMOBILES SA, 78140 Vélizy Villacoublay (FR)
(72) Inventeur: Lebreton, Etienne, 2036 Cormondrèche (CH); Feron, Stéphane, 92120, MONTROUGE (FR)
(74) Mandataire: Vigand, Régis Louis Michel

(57) **Abrégé**

Un tableau (TC) est dédié à la commande d'au moins un autoradio (AR) comprenant au moins une fente de lecture de média (F1). Ce tableau (TC) comprend i) une fente de passage de média (F2), ii) sur une face arrière (FR), au moins un pion de centrage (PC) destiné à être introduit dans un logement (LP) de l'autoradio (AR) afin de positionner la fente de passage de média (F2) en regard de la fente de lecture de média (F1), iii) dans une partie supérieure (PS), des moyens de clippage articulés (MC) propres à le fixer à une planche de bord (PB) d'un véhicule automobile et à permettre son entraînement en rotation en vue de l'introduction de chaque pion de centrage (PC) dans le logement (LP) correspondant, et iv) dans une partie (PI) située en-dessous de sa partie supérieure (PS), des moyens de fixation (PV) propres à permettre sa fixation à un élément (P2) du véhicule.

## Description

L'invention concerne les véhicules automobiles, et plus précisément la fixation des tableaux de commande sur les planches de bord de tels véhicules.

Certains véhicules sont équipés d'un autoradio, à lecteur de média de type CD ou K7, qui est initialement livré en usine avec une façade dépourvue d'interface homme/machine de commande (boutons, actionneurs et/ou zones tactiles).

Ce type d'autoradio est alors installé dans le véhicule derrière un tableau de commande (également appelé « plastron électronique » ou « façade monobloc ») qui est pourvu d'une interface homme/machine pour la commande de l'autoradio, ainsi qu'éventuellement d'au moins une autre interface homme/machine pour la commande d'un autre système, comme par exemple le système de contrôle de l'aérothermie du véhicule (climatisateur ou chauffage) ou un système d'aide à la navigation.

L'interface homme/machine dédiée à la commande de l'autoradio est couplée à ce dernier soit directement par des câbles électriques, soit indirectement par l'intermédiaire d'un module d'interface comprenant des engrenages chargés de convertir les commandes saisies par un passager en commandes adaptées à l'autoradio.

Cette séparation de l'autoradio de son interface homme/machine de commande est avantageuse du fait qu'elle offre plus de liberté de conception. Cependant, elle impose que le tableau de commande soit positionné de façon précise par rapport à l'autoradio, et plus précisément que la fente de passage de média que comprend le tableau de commande soit précisément positionnée en regard de la fente de lecture de média de l'autoradio.

Pour obtenir ce positionnement précis, il est connu de fixer le tableau de commande non seulement à la planche de bord (ainsi qu'éventuellement à un autre élément du véhicule), mais également à des plaques qui sont précisément positionnées par rapport à la structure du véhicule et donc également par rapport à l'autoradio. L'installation du tableau de commande dans une position précise nécessite donc de nombreuses opérations (interventions) manuelles et plusieurs moyens de fixation, ce qui augmente le temps de montage et le coût du véhicule.

L'invention a donc pour but d'améliorer la situation, et plus précisément de permettre un positionnement précis du tableau de commande par rapport à l'autoradio, avec un nombre limité d'opérations de montage et de moyens de fixation.

Elle propose à cet effet un tableau, dédié à la commande d'au moins un autoradio qui comprend au moins une fente de lecture de média, comprenant une fente de passage de média, et destiné à être fixé au moins à la planche de bord d'un véhicule automobile.

Ce tableau de commande se caractérise par le fait qu'il comprend :
- sur une face arrière, au moins un pion de centrage destiné à être introduit dans un logement de l'autoradio pour positionner la fente de passage de média en regard de la fente de lecture de média,
- dans une partie supérieure, des moyens de clippage articulés destinés à fixer le tableau à la planche de bord et à permettre l'entraînement en rotation du tableau en vue de l'introduction de chaque pion de centrage dans le logement correspondant, et
- dans une partie située en-dessous de la partie supérieure, des moyens de fixation propres à permettre la fixation du tableau à un élément du véhicule.

Le tableau de commande selon l'invention peut comporter d'autres caractéristiques qui peuvent être prises séparément ou en combinaison, et notamment :
- sa partie qui est située en-dessous de sa partie supérieure peut être une zone comportant les moyens de fixation et destinée à être cachée ;
- sa partie qui est située en-dessous de sa partie supérieure peut être une partie inférieure qui est située sensiblement à l'opposée de la partie supérieure ;
- ses moyens de fixation peuvent être agencés sous la forme d'au moins un trou traversant adapté au passage d'une vis ;
- l'élément sur lequel il est fixé peut être une partie inférieure de la planche de bord ;
- il peut être également adapté à la commande d'un système de contrôle de l'aérothermie à l'intérieur du véhicule ;
- il peut comprendre au moins une autre fente dédiée au passage d'une carte électronique stockant des données numériques ou d'un connecteur ;
- il peut comprendre i) au moins une interface homme/machine de commande accessible sur une face avant, et ii) un module d'interface fixé sur sa face arrière et comprenant des engrenages couplés à l'interface homme/machine de commande et propres à convertir des commandes saisies par un passager en commandes adaptées à des organes du véhicule ;
   ➢ le module d'interface peut être fixé par clippage sur sa face arrière.

L'invention propose également un procédé de fixation d'un tableau de commande (du type présenté ci-avant) à au moins une planche de bord d'un véhicule automobile.

Ce procédé se caractérise par le fait qu'il consiste, après avoir installé l'autoradio dans le véhicule :
- à introduire partiellement la partie supérieure du tableau derrière la planche de bord de manière à fixer ses moyens de clippage à la planche de bord, puis
- ii) entraîner en rotation le tableau afin d'introduire chaque pion de centrage du tableau dans le logement correspondant de l'autoradio et de positionner la fente de passage de média du tableau en regard de la fente de lecture de média de l'autoradio, et
- à fixer à un élément du véhicule la partie du tableau qui est située en-dessous de sa partie supérieure, en utilisant au moins les moyens de fixation qui sont situés dans cette partie à fixer.

On peut par exemple fixer à l'élément la partie du tableau qui est située en-dessous de sa partie supérieure au moyen d'au moins une vis que l'on introduit dans un trou faisant partie des moyens de fixation du tableau.

L'invention propose également un tableau de commande destiné à être fixé au moins à une planche de bord d'un véhicule automobile et comprenant une fente de passage de média, une première interface homme/machine pour la commande d'un autoradio comprenant au moins une fente de lecture de média, une interface homme/machine pour la commande d'un système de contrôle de l'aérothermie du véhicule, et un circuit de multiplexage des signaux issus de commandes saisies au moyen de l'une au moins des première et seconde interfaces homme/machine.

Ce tableau de commande se caractérise par le fait qu'il comprend en outre :
- au moins un pion de centrage destiné à être introduit dans un logement de l'autoradio pour positionner la fente de passage de média en regard de la fente de lecture de média,
- des moyens de clippage articulés propres à fixer une partie supérieure du tableau à la planche de bord, tout en étant invisible à l'intérieur du véhicule, et à permettre l'entraînement en rotation du tableau en vue de l'introduction de chaque pion de centrage dans le logement correspondant, et
- au moins un trou adapté à la traversée d'une vis destinée à fixer à un élément du véhicule une partie cachée du tableau, située en-dessous de sa partie supérieure,
   permettant ainsi de positionner précisément le tableau par rapport à l'autoradio tout en limitant le nombre d'opérations de montage.

L'invention propose également un tableau de commande destiné à être fixé au moins à une planche de bord d'un véhicule automobile et comprenant au moins :
- une première interface homme/machine pour la commande d'un autoradio comprenant au moins une fente de lecture de média,
- une seconde interface homme/machine pour la commande d'une climatisation du véhicule,
- un circuit de multiplexage des signaux de sortie des première et seconde interfaces homme/machine, destiné à être raccordé au réseau électronique du véhicule,
et comprenant en outre :
- une fente de passage de média,
- un système de centrage destiné à centrer la fente de passage de média sur la fente de lecture de média de l'autoradio,
- un système de charnière situé en haut du tableau de commande, pour sa fixation partielle à la planche de bord, et
- un système de fixation situé en dessous des première et seconde interfaces homme/machine.

Ce système de fixation est agencé de manière à s'affranchir d'une coopération avec des éléments qui sont situés sur les côtés du tableau de commande, permettant ainsi à ce dernier de constituer une espèce de « plastron » (ou façade) amovible.

D'autres caractéristiques et avantages de l'invention apparaîtront à l'examen de la description détaillée ci-après, et des dessins annexés, sur lesquels :
- la figure 1 illustre dans une vue en coupe transversale un premier exemple de réalisation d'un tableau de commande selon l'invention, fixé à un tableau de commande d'un véhicule automobile, et
- la figure 2 illustre dans une vue en coupe transversale un second exemple de réalisation d'un tableau de commande selon l'invention, fixé à un tableau de commande d'un véhicule automobile.

Les dessins annexés pourront non seulement servir à compléter l'invention, mais aussi contribuer à sa définition, le cas échéant.

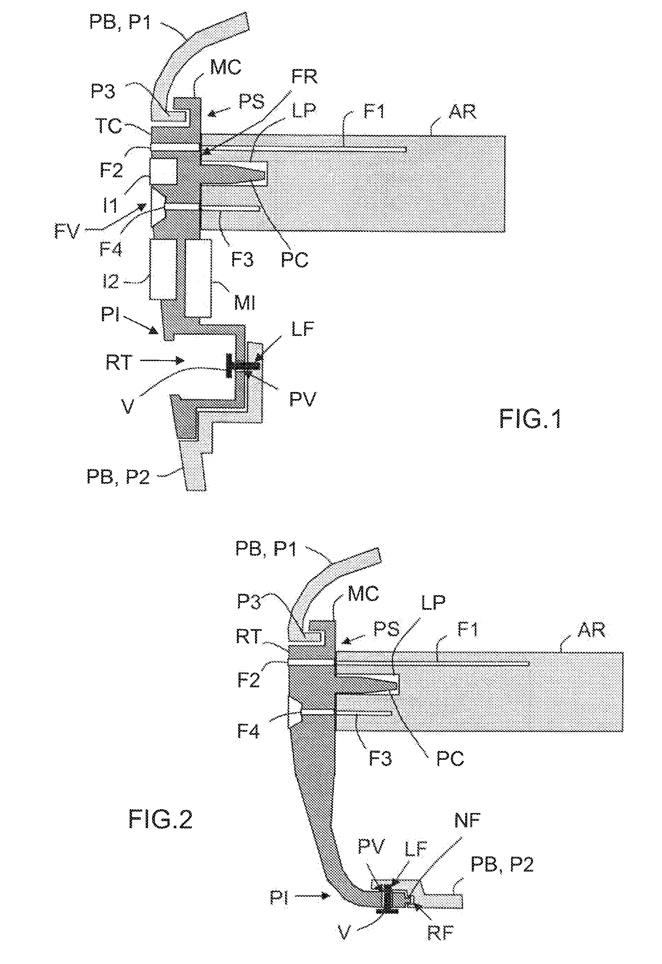

Comme illustré sur la figure 1, l'invention propose un nouveau tableau de commande TC destiné à être fixé au moins à la planche de bord PB d'un véhicule automobile et à commander au moins un autoradio AR, à lecteur de média de type CD ou K7 et dont la façade est dépourvue d'interface homme/machine de commande (boutons, actionneurs et/ou zones tactiles).

Comme illustré, l'autoradio AR comprend au moins une fente de lecture de média F1, par exemple destinée à recevoir un CD en vue de sa lecture et débouchant sur sa façade (ou face avant). Par ailleurs, et comme illustré, l'autoradio AR peut éventuellement comprendre au moins une autre fente F3 destinée à recevoir un autre média, comme par exemple une carte électronique stockant des données numériques, ou un connecteur (par exemple de type Jack ou USB).

L'autoradio AR comprend également, en au moins un endroit choisi, de sa façade, un logement LP destiné à recevoir un pion de centrage PC, sur lequel on reviendra plus loin.

Le tableau de commande TC, selon l'invention, comprend tout d'abord une fente F2 dédiée au passage des média (ici des CDs) qui doivent être lus par l'autoradio AR une fois introduits dans sa fente de lecture de média F1. Il comprend également en au moins un endroit de sa face arrière FR au moins un pion de centrage PC destiné à être introduit dans un logement LP correspondant de l'autoradio AR, afin de permettre le positionnement précis de la fente de passage de média F2 en regard de la fente de lecture de média F1. On comprendra que l'on peut prévoir plusieurs plots de centrage PC, éventuellement de formes différentes et/ou éventuellement en des endroits différents.

Le tableau de commande TC comprend également, dans une partie supérieure PS (et de préférence au niveau de son extrémité supérieure), des moyens de clippage articulés MC. Le mot articulé doit être ici compris dans une définition large et non limitée à une articulation ou une charnière. En effet, les moyens de clippage MC doivent tout d'abord permettre la fixation, par clippage (ou équivalent), de la partie supérieure PS du tableau de commande TC sur une partie P1 de la planche de bord PB, puis l'entraînement en rotation du tableau de commande TC par rapport à ladite partie P1 de la planche de bord PB.

A cet effet, les moyens de clippage MC (de type mécanique) peuvent comporter une partie dédiée au clippage (fixation) sur une portion P3 de la partie P1 de la planche de bord PB qui est adaptée à cet effet, et au moins une partie réalisée dans un matériau flexible, par exemple en matière plastique ou composite semi-souple. La partie des moyens de clippage MC qui est dédiée au clippage peut être également réalisée dans le même matériau flexible. Dans une variante, chaque moyen de clippage MC peut être monté sur une charnière ou une articulation. Par exemple, les moyens de clippage MC sont constitués d'au moins un clip de type mâle (ou femelle) destiné à coopérer avec des moyens de clippage correspondants, de type femelle (ou mâle), de la portion P3. Le nombre de moyens de clippage est choisi de manière à optimiser l'imobilisation de la partie supérieure PS du tableau de commande TC par rapport à la partie P1 de la planche de bord PB.

L'entraînement en rotation du tableau de commande TC, une fois sa partie supérieure PS fixée à la partie P1 de la planche de bord PB, est destiné à le rabattre vers l'autoradio AR en vue de l'introduction de chaque pion de centrage PC qu'il comprend dans le logement LP correspondant de l'autoradio AR. Une fois le(s) pion(s) de centrage PC introduit(s) dans le(s) logement(s) correspondant(s), on est certain que la fente de passage de média F2 est positionnée précisément en regard de la fente de lecture de média F1. Le tableau de commande TC est ainsi « indexé » par rapport à l'autoradio AR.

Il ne reste plus alors qu'à fixer le tableau de commande TC à un autre élément P2 fixé à la structure du véhicule pour qu'il soit définitivement installé. Il est important de noter que l'élément P2 n'est pas obligatoirement une sous-partie de la planche de bord PB. Cela peut être le cas, comme dans les exemples illustrés sur les figures 1 et 2, mais dans une variante cela peut ne pas être le cas. Dans cette variante, l'élément P2 peut par exemple être le plancher du véhicule ou bien une pièce rapportée sur ce plancher.

Selon l'invention, cette fixation se fait grâce à des moyens de fixation PV qui sont définis dans une partie PI du tableau de commande TC, laquelle est située en-dessous de sa partie supérieure PS. Cette partie PI est, comme illustré sur les figures 1 et 2, de préférence la partie inférieure du tableau de commande TC, laquelle est sensiblement située à l'opposé de sa partie supérieure PS (où sont implantés les moyens de clippage articulés MC).

Comme illustré sur les figures 1 et 2, les moyens de fixation PV peuvent être agencés sous la forme d'au moins un trou traversant adapté au passage d'une vis V destinée à être vissée dans un logement fileté LF correspondant défini dans l'élément P2. On comprendra que l'on peut prévoir plusieurs trous traversants PV, éventuellement implantés en des endroits différents de la partie PI du tableau de commande TC. Mais, un ou deux trous traversant PV combinés à une ou deux vis V, sont généralement suffisants pour assurer une fixation de qualité.

On notera que tous moyens de fixation connus de l'homme de l'art peuvent être utilisés pour assurer la fixation de la partie PI du tableau de commande TC à l'élément P2. Ainsi, on pourrait par exemple envisager d'utiliser des moyens de clippage définis sur la face arrière FR au lieu d'au moins un trou traversant.

Egalement de préférence, les moyens de fixation PV sont définis dans une (ou plusieurs) portion(s) de la partie PI qui n'est (ne sont) pas directement visible(s) par un passager. Ainsi, dans l'exemple non limitatif de la figure 1, les moyens de fixation PV (trou(s) traversant(s)) sont définis au fond d'un renfoncement RT que comprend la partie PI du tableau de commande TC. Ce renfoncement peut par exemple constituer un rangement, éventuellement à accès contrôlé par une porte montée à rotation sur la face avant FV, ou bien loger un tiroir coulissant ou amovible (servant éventuellement de cendrier). Dans une variante, on pourrait définir le(s) trou(s) traversant(s) PV à partir de la face avant FV et ailleurs que dans un renfoncement, et placer un cache décoratif sur la tête de chaque vis V.

Dans l'exemple non limitatif de la figure 2, les moyens de fixation PV (trou(s) traversant(s)) sont définis dans une partie PI qui constitue la partie d'extrémité de la partie inférieure du tableau de commande TC et qui est recourbée (en direction du compartiment moteur (avant) du véhicule). Cette partie PI étant placée sensiblement perpendiculairement au reste du tableau de commande, elle n'est pas en visibilité des passagers lorsqu'ils sont assis dans les sièges avant du véhicule. Par conséquent, les moyens de fixation PV sont cachés sans être implantés dans un renfoncement ou derrière un cache décoratif.

La partie terminale de la partie d'extrémité inférieure du tableau de commande TC peut éventuellement comprendre, comme illustré, une (ou des) nervure(s) (ou rainure(s)) NF destinée(s) à coopérer avec une (ou des) rainure(s) (ou nervure(s)) RF correspondante(s) définie(s) sur l'élément P2.

Comme illustré sur la figure 1, le tableau de commande TC comprend également au moins une première interface homme/machine I1 dédiée à la commande de l'autoradio AR. Cette première interface I1 fait partiellement saillie sur la face avant FV du tableau de commande TC afin de permettre à un passager de saisir des instructions de commande de l'autoradio. Plus précisément, ce sont au moins des organes de saisie (ou de commande), tels que des boutons, des actionneurs et/ou des zones tactiles, qui font saillie sur la face avant FV.

Cette première interface I1 peut être couplée à l'autoradio AR soit directement par des câbles électriques, soit indirectement (comme illustré sur la figure 1) par l'intermédiaire d'un module d'interface MI. Ce dernier est de préférence clippé sur la face arrière FR du tableau de commande TC et dépourvu de composant électroniques (lesquels sont préférentiellement contenus dans la première interface I1), mais comprend par exemple des engrenages qui sont chargés de convertir les commandes saisies par un passager au moyen de la première interface I1 en commandes adaptées à l'autoradio AR.

Comme illustré sur la figure 1, le tableau de commande TC peut également comprendre au moins une seconde interface homme/machine I2 par exemple dédiée à la commande d'un système de contrôle de l'aérothermie du véhicule (climatiseur ou chauffage) ou bien d'un système d'aide à la navigation.

Cette seconde interface I2 fait partiellement saillie sur la face avant FV du tableau de commande TC afin de permettre à un passager de saisir des instructions de commande du système correspondant. Plus précisément, ce sont au moins des organes de saisie (ou de commande), tels que des boutons, des actionneurs et/ou des zones tactiles, qui font saillie sur la face avant FV.

Cette seconde interface I2 peut être couplée au système correspondant soit directement par des câbles électriques, soit indirectement par l'intermédiaire du module d'interface MI. Ce dernier comprend alors, par exemple, des engrenages qui sont chargés de convertir les commandes saisies par un passager au moyen de la seconde interface I2 en commandes adaptées au système concerné.

Lorsque le tableau de commande TC comprend un module d'interface MI couplé à une seconde interface I2 dédiée à la climatisation, et que les commandes du climatiseur comprennent un organe de type tirette pour le contrôle du recyclage manuel, cette tirette fait de préférence partie du module d'interface MI.

Bien que cela ne soit pas représenté sur les figures, le tableau de commande TC peut également comprendre un circuit de multiplexage de certains signaux qui sont issus de commandes saisies au moyen de l'une au moins des première I1 et seconde I2 interfaces homme/machine.

L'installation du tableau de commande TC dans le véhicule se fait en effectuant les étapes du procédé de fixation décrit ci-dessous.

Ce procédé de fixation débute une fois que l'autoradio AR a été installé dans le véhicule.

On commence alors par introduire partiellement la partie supérieure PS du tableau de commande TC derrière la planche de bord PB, et plus précisément derrière sa partie P1, afin de la fixer, par clippage, au moyen de ses moyens de clippage MC et des moyens correspondants définis sur la portion P3 de la partie P1 de la planche de bord PB.

Lorsque le tableau de commande TC comprend une première interface I1, mais pas de module d'interface MI, on procède au raccordement de la première interface I1 à l'autoradio AR via des câbles électriques ou via le circuit de multiplexage. Lorsque le tableau de commande TC comprend une première interface I1 couplée au module d'interface MI, on procède au raccordement du module d'interface MI à l'autoradio AR via des câbles électriques ou via le circuit de multiplexage.

Par ailleurs, si le tableau de commande TC comprend au moins une seconde interface I2, mais pas de module d'interface MI, on procède au raccordement de la seconde interface I2 au système correspondant via des câbles électriques ou via le circuit de multiplexage. Lorsque le tableau de commande TC comprend une seconde interface I2 couplée au module d'interface MI, on procède au raccordement du module d'interface MI au système correspondant à cette seconde interface I2 via des câbles électriques ou via le circuit de multiplexage.

Puis, on entraîne en rotation le tableau de commande TC vers l'autoradio AR afin d'introduire chaque pion de centrage PC de ce tableau de commande TC dans le logement LP correspondant de l'autoradio AR et ainsi positionner la fente de passage de média F2 en regard de la fente de lecture de média F1 (et toute autre fente de passage F4 en regard de toute autre fente de lecture ou de connexion F3 de l'autoradio ou de tout autre équipement ou élément). Chaque autre fente de lecture F3 peut par exemple comporter une prise de type Jack ou un port USB (ou analogue).

Enfin, on fixe à l'élément P2 du véhicule la partie PI du tableau de commande TC qui est située en-dessous de sa partie supérieure PS, en exerçant une légère pression sur la face avant FV du tableau de commande TC, et en utilisant au moins les moyens de fixation PV qui sont situés dans la partie PI. Dans les deux exemples non limitatifs illustrés, les moyens de fixation PV sont constitués d'au moins un trou traversant. Par conséquent, la fixation se fait en introduisant une vis V dans chaque trou traversant PV, puis en vissant chaque vis dans le logement fileté LF correspondant de l'élément P2.

L'installation du tableau de commande TC est alors terminée. Des équipements additionnels (ou accessoires), tels qu'un cendrier ou un tiroir ou encore un allume-cigarette, peuvent ensuite lui être adjoints si nécessaire.

L'invention est particulièrement avantageuse car elle offre un positionnement précis du tableau de commande par rapport à l'autoradio, limite le nombre de moyens de fixation (notamment de vis) utilisés et le nombre d'opérations manuelles à effectuer, permettant ainsi de réduire les temps de montage et de limiter les coûts, supprime ce que l'homme de l'art appelle « l'intrusion technique » sur la façade de style (ou tableau de commande), et permet un éventuel démontage non destructif du tableau de commande.

L'invention ne se limite pas aux modes de réalisation de tableau de commande et de procédé de fixation décrits ci-avant, seulement à titre d'exemple, mais elle englobe toutes les variantes que pourra envisager l'homme de l'art dans le cadre des revendications ci-après.

## Revendications

1. Tableau (TC) de commande d'au moins un autoradio (AR) comprenant au moins une fente de lecture de média (F1), ledit tableau (TC) comprenant une fente de passage de média (F2) et étant destiné à être fixé au moins à une planche de bord (PB) d'un véhicule automobile, **caractérisé en ce qu'**il comprend i) sur une face arrière (FR), au moins un pion de centrage (PC) propre à être introduit dans un logement (LP) dudit autoradio (AR) pour positionner ladite fente de passage de média (F2) en regard de ladite fente de lecture de média (F1), ii) dans une partie supérieure (PS), des moyens de clippage articulés (MC) propres à fixer ledit tableau (TC) à ladite planche de bord (PB) et à permettre l'entraînement en rotation dudit tableau (TC) en vue de l'introduction de chaque pion de centrage (PC) dans le logement (LP) correspondant, et iii) dans une partie (PI) située en-dessous de ladite partie supérieure (PS), des moyens de fixation (PV) propres à permettre la fixation dudit tableau (TC) à un élément (P2) dudit véhicule.

2. Tableau selon la revendication 1, **caractérisé en ce que** ladite partie (PI) située en-dessous de ladite partie supérieure (PS) est une zone comportant lesdits moyens de fixation (PV) et destinée à être cachée.

3. Tableau selon l'une des revendications 1 et 2, **caractérisé en ce que** ladite partie (PI) située en-dessous de ladite partie supérieure (PS) est une partie inférieure située sensiblement à l'opposée de ladite partie supérieure (PS).

4. Tableau selon l'une des revendications 1 à 3, **caractérisé en ce que** lesdits moyens de fixation (PV) sont agencés sous la forme d'au moins un trou traversant adapté au passage d'une vis (V).

5. Tableau selon l'une des revendications 1 à 4, **caractérisé en ce que** ledit élément (P2) est une partie inférieure de ladite planche de bord (PB).

6. Tableau selon l'une des revendications 1 à 5, **caractérisé en ce qu'**il est également adapté à la commande d'un système de contrôle de l'aérothermie à l'intérieur dudit véhicule.

7. Tableau selon l'une des revendications 1 à 6, **caractérisé en ce qu'**il comprend au moins une autre fente (F4) dédiée au passage d'une carte électronique stockant des données numériques ou d'un connecteur.

8. Tableau selon l'une des revendications 1 à 7, **caractérisé en ce qu'**il comprend i) au moins une interface homme/machine de commande (I1, I2) accessible sur une face avant (FV), et ii) un module d'interface (MI) fixé sur sa face arrière (FR) et comprenant des engrenages couplés à ladite interface homme/machine de commande (I1, I2) et propres à convertir des commandes saisies par un passager en commandes adaptées à des organes dudit véhicule.

9. Tableau selon la revendication 8, **caractérisé en ce que** ledit module d'interface (MI) est fixé par clippage sur ladite face arrière (FR).

10. Procédé de fixation d'un tableau (TC) de commande selon l'une des revendications précédentes à au moins une planche de bord (PB) d'un véhicule automobile, **caractérisé en ce qu'**il consiste, après avoir installé l'autoradio (AR) dans ledit véhicule, i) à introduire partiellement la partie supérieure (PS) dudit tableau (TC) derrière ladite planche de bord (PB) de manière à fixer ses moyens de clippage (MC) à ladite planche de bord (PB), puis ii) à entraîner en rotation ledit tableau (TC) de manière à introduire chaque pion de centrage (PC) du tableau (TC) dans le logement (LP) correspondant dudit autoradio (AR) et à positionner la fente de passage de média (F2) dudit tableau (TC) en regard de la fente de lecture de média (F1) de l'autoradio (AR), et iii) à fixer à un élément (P2) dudit véhicule la partie (PI) du tableau (TC) qui est située en-dessous de sa partie supérieure (PS) en utilisant au moins les moyens de fixation (PV) situés dans ladite partie (PI).

11. Procédé selon la revendication 10, **caractérisé en ce que** l'on fixe audit élément (P2) la partie (PI) du tableau (TC) qui est située en-dessous de sa partie supérieure (PS) au moyen d'au moins une vis (V) introduite dans un trou faisant partie desdits moyens de fixation (PV) du tableau (TC).

12. Tableau (TC) de commande, destiné à être fixé au moins à une planche de bord (PB) d'un véhicule automobile, et comprenant une fente de passage de média (F2), une première interface homme/machine (I1) pour la commande d'un autoradio (AR) comprenant au moins une fente de lecture de média (F1), une interface homme/machine (I2) pour la commande d'un système de contrôle de l'aérothermie du véhicule, et un circuit de multiplexage des signaux issus de commandes saisies au moyen de l'une au moins desdites première (I1) et seconde (I2) interfaces homme/machine, **caractérisé en ce qu'**il comprend i) au moins un pion de centrage (PC) propre à être introduit dans un logement (LP) dudit autoradio (AR) pour positionner ladite fente de passage de média (F2) en regard de ladite fente de lecture de média (F1), ii) des moyens de clippage articulés (MC) propres à fixer une partie supérieure (PS) dudit tableau (TC) à ladite planche de bord (PB) tout en étant invisible à l'intérieur du véhicule et à permettre l'entraînement en rotation dudit tableau (TC) en vue de l'introduction de chaque pion de centrage (PC) dans le logement (LP) correspondant, et iii) au moins un trou (PV) adapté à la traversée d'une vis destinée à fixer à un élément (P2) dudit véhicule une partie (PI) cachée du tableau (TC), située en-dessous de sa partie supérieure (PS), permettant ainsi de positionner précisément le tableau (TC) par rapport audit autoradio (AR) tout en limitant le nombre d'opérations de montage.

13. Tableau (TC) de commande, destiné à être fixé au moins à une planche de bord (PB) d'un véhicule automobile, et comprenant au moins :
- une première interface homme/machine (I1) pour la commande d'un autoradio (AR) comprenant au moins une fente de lecture de média (F1),
- une seconde interface homme/machine (I2) pour la commande d'une climatisation du véhicule,
- un circuit de multiplexage des signaux de sortie des première (I1) et seconde (I2) interfaces homme/machine, destiné à être raccordé au réseau électronique du véhicule,
et comprenant en outre :
- une fente de passage de média (F2),
- un système de centrage (PC) destiné à centrer la fente de passage de média (F2) sur la fente de lecture de média (F1) de l'autoradio (AR),
- un système de charnière (MC) situé en haut dudit tableau de commande (TC), pour sa fixation partielle à la planche de bord (PB), et
- un système de fixation (PV) situé en dessous des première (I1) et seconde (I2) interfaces homme/machine.

14. Tableau selon la revendication 13, **caractérisé en ce que** ledit système de fixation (PV) est agencé de manière à s'affranchir d'une coopération avec des éléments situés sur les côtés dudit tableau de commande (TC), de sorte que ce dernier constitue une espèce de « plastron » amovible.
